# EUROPEAN PATENT SPECIFICATION

(11) **EP 0 362 501 B1**
(45) Date of publication and mention of the grant of the patent: **19.05.1993**
(21) Application number: 89113424.9
(22) Date of filing: 21.07.1989
(51) Int. Cl.: B60R 15/04, B65G 69/18, F16L 37/00

(54) **Mechanical device for seal tight connection of two liquid vessels**
Leckfreie Kupplungsvorrichtung von zwei Behältern
Dispositif de connection étanche de deux réservoirs

(30) Priority: 19.09.1988 IT 8366188
(43) Date of publication of application: 11.04.1990
(73) Proprietor: Pozzi, Carlo Maurizio, Gandria Canton Ticino (CH)
(72) Inventor: Pozzi, Carlo Maurizio, Gandria Canton Ticino (CH)
(74) Representative: Gervasi, Gemma, Dr.

(56) References cited:
- EP-A- 0 248 507
- EP-A- 0 248 511
- FR-A- 2 259 773

## Description

This invention relates to a mechanical device connecting in seal tight relation two vessels for liquids as defined in the preamble of claim 1 and as disclosed for example in the document EP-A-0 248 507.

The object of the invention is to provide an easy, quick, seal tight connection between two vertically overlapping vessels, in order to permit the transfer, by the simple action of gravity, of a liquid contained in the top vessel into the bottom vessel, at least the latter being removable after having disengaged the connection. To this end the mechanical device in accordance with the present invention is characterized by the features of the characterizing portion of claim 1.

According to this invention, the seal tight connection between the vessels is achieved by means of a connecting union rotatable on its axis by means of a manually actuated lever, and which may shift axially thanks to a helical quick coupling with respect to a fixed flange. The latter retains on the one side, in seal tight relation, the discharge neck of the top vessel, while the union, also slideable and seal tight on the lower part of the fixed flange, engages the inlet opening of the lower vessel through a suitable gasket.

The invention will now be described in conjunction with the annexed drawings illustrating a non limitative example of embodiment of the device according to the invention.

In the drawings :
Fig. 1 is a view in partial section of the assembly.
Fig. 2 shows the device viewed from bottom to top along lines II-II and
Fig. 3 is a schematic view showing an example of utilization of the device applied to two vessels, according to the invention.

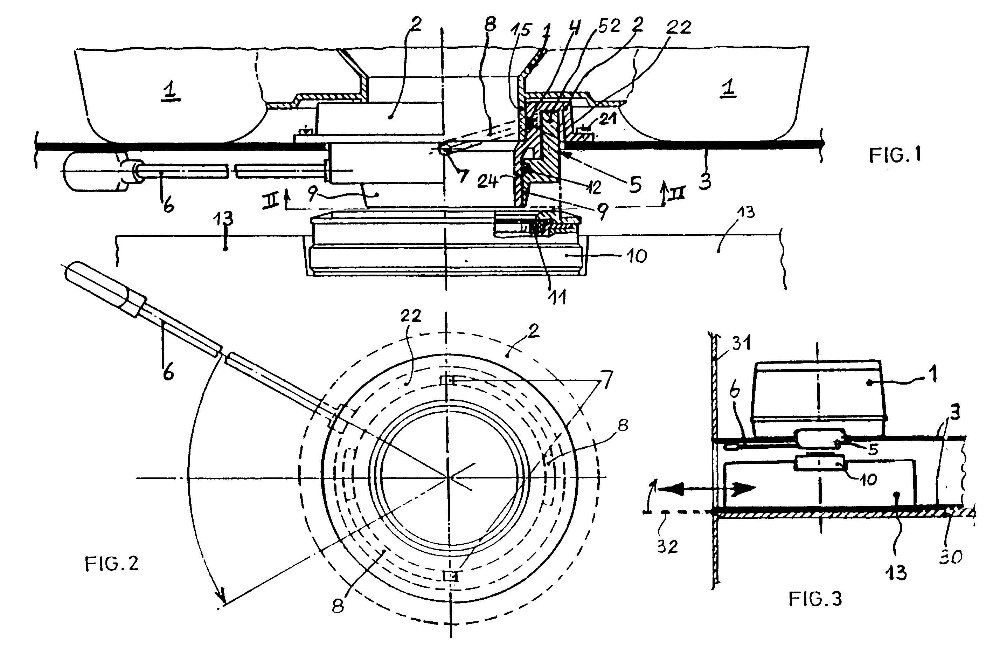

Reference number 1, in Figure 1, shows the top vessel the lower outlet neck 15 of which is to be placed in seal tight communication with an underlying vessel 13 to collect the liquid discharged from said top vessel.

In the example considered, (see Fig. 3), vessel 1 consists of a chemical W.C. used in camping vehicles such as motor homes, campers, caravans etc, and is placed above a parallelepipedal housing 3 resting in turn on floor 30. The housing 3 rests on the one side against wall 31 of the vehicle, said wall being provided with an external door 32 through which the movable vessel 13, to be emptied, after having collected the liquid discharged from the overlying W.C., can be inserted or removed.

The connecting device comprises a first element consisting of a flange 2 secured by means of screw 21 to the housing 3 on which the upper vessel 1 is secured. The body of said flange is provided, peripherically, with an annular cavity 22 the aperture of which is opened downward, and extends in its lower part with a cylindrical sleeve 24.

Two cylindrical diametrally opposite projecting pins 7 integral with flange 2, are provided on the opening of annular cavity 22, whilst an annular seat provided inside the flange itself houses and "O Ring" type gasket 4 which constitutes the sealing element fitted between the discharge neck 15 of vessel 1 and the inner surface of the flange.

The second element of the device consists of a connecting union 5 comprising a top crown 52 which may be inserted into cavity 22 of flange 2, said crown being provided internally, with two quick-pitch helical grooves 8 located opposite to each other and each extending over an 90° arc. Pins 7 of flange 2 engage said grooves to permit the screwing and unscrewing of union 5 with respect to the flange, hence permitting its axial shifting which is proportional to the pitch of helical grooves 8 and to the angle of rotation of the union itself, the rotation of said union being actuated by a lever 6 applied on its periphery.

Union 5 is provided, on its lower part, with an internally cylindrical neck 9, which freely slides, with a small play, with respect to the external surface of lower sleeve 24 of the flange 2. The union is therefore guided in its axial and rotary excursion,whilst tight sealing between the adjacent surfaces of neck 9 and sleeve 24 is ensured by an O-Ring type gasket 12, inserted in an annular internal groove of neck 9 which is externally conical, for convenient insertion in seal tight relation into the inlet fitting 10 of lower vessel 13, provided with a suitable lip seal gasket 11.

By providing an adequate pitch of the annular helical grooves 8, it is possible to achieve a sufficient axial movement of union 5 to insert it on vessel 13 with a limited angular excursion of lever 6.

In one example of embodiment with a pitch of 72mm of helical groove 8, the union 5 can be shifted by 12mm axially downward with only a 60° rotation of lever 6.

By actuating lever 6 in the opposite direction, the union 5 can be disengaged from vessel 13 to permit its removal from housing 3, for emptying.

## Claims

1. Mechanical device connecting in seal tight relation two vessels for liquids of which the higher vessel (1) is secured to the top wall of a housing (3) in which is inserted removably a lower vessel (13), apt to receive the liquids coming from the higher vessel (1), characterized by a flange (2) secured to the top wall of the housing (3), said flange being provided with a peripheral cavity (22) open downward and with a lower cylindrical sleeve (24) on the outer surface of which rotates, in seal tight relation, a connecting union (5) provided with a top crown (52), having internally two quick pitch helical grooves (8) engaging with corresponding pins (7) integral with flange (2), and forming a helical coupling (7-8) being apt to permit the screwing and unscrewing of union (5) with respect to fixed flange (2) to allow axial shifting in the upward and downward direction, in order to be coupled and de-coupled with inlet fitting (10) of lower vessel (13).

2. Device according to claim 1, characterized in that the connecting union (5) is provided, in its lower part, with an internally cylindrical neck (9) which constitutes the guiding element for the union itself with respect to fixed flange (2), working in loose coupling with sleeve (24) the lower part of which is integral with the flange itself, while said neck (9) is conical externally and tapering downward.

3. Device according to claims 1 and 2, characterized in that the seal between the discharge neck (15) of upper vessel (1) and the fixed flange (2) is achieved by means of a gasket (4), preferably of the O-Ring type, fitted into an annular cavity on the upper internal surface of flange (2) and co-operating with the peripheral surface of discharge neck (15); in that the seal between the connecting union (5) and the cylindrical sleeve (24), in the lower part integral with flange (2) is achieved by means of a gasket (12), preferably also of the O-Ring type, fitted in an annular cavity on the internal cylindrical surface of neck 9 of union (5) and cooperating with the cylindrical external surface of sleeve (24) of flange (2), while the seal of connecting union (5) into the fitting (10) of lower vessel (13) is achieved by means of a lip seal gasket (11).

4. Device according to claim 1, characterized in that crown (52) of the connecting union (5) in the highest position reached by the union itself in its axial movement with respect to flange (2) enters into the peripheral cavity (22) on the outside of the flange-itself.

5. Device according to claim 1, characterized in that a lever (6) with handgrip is connected to the periphery of the union (5) to allow angular movement of said union.

## Patentansprüche

1. Mechanische Vorrichtung zum leckfreien Verbinden von zwei Behältern für Flüssigkeiten, von denen der obere Behälter (1) auf der Oberseite einer Wand eines Gehäuses (3) befestigt ist, in das ein unterer Behälter (13) entfernbar eingeschoben ist, der seinerseits dazu geeignet ist, Flüssigkeiten aufzunehmen, die aus dem oberen Behälter (1) kommen, **gekennzeichnet** durch einen Flansch (2), der an der oberen Wand des Gehäuses (3) befestigt ist und der mit einem nach unten offenen Umfangshohlraum (22) versehen ist sowie mit einer unteren, zylindrischen Hülse (24), an deren Außenumfangsfläche abgedichtet eine Verbindungseinheit (5) drehbar angeordnet ist, die ihrerseits mit einer oberen Krone (52) versehen ist, die innerlich zwei schraubenförmige Nuten (8) mit hoher Steigung aufweist, die mit entsprechenden Stiften (7) in Eingriff sind, die Teile des Flansches (2) sind und die eine schraubenförmige Verbindung (7, 8) bilden, die in der Lage ist, ein Auf- und Abschrauben der Verbindungseinheit (5) in bezug auf den festen Flansch (2) durchzuführen, um eine axiale Verschiebung nach oben und unten zu ermöglichen, um auf diese Weise mit dem Einlaßanschluß (10) des unteren Behälters (13) verbunden und gelöst zu werden.

2. Vorrichtung nach Anspruch 1, dadurch gekennzeichnet, daß die Verbindungseinheit (5) in ihrem unteren Teil mit einem innerlich zylindrischen Hülsenansatz (9) versehen ist, der das Führungselement für die Verbindungseinheit selbst in bezug auf den festen Flansch (2) darstellt und der in loser Verbindung mit der Hülse (24) arbeitet, deren unteres Ende ein Teil des Flansches (2) ist, während der Hülsenansatz (9) außen konisch und nach unten abgeschrägt ist.

3. Vorrichtung nach den Ansprüchen 1 und 2, dadurch gekennzeichnet,
- daß die Dichtung zwischen dem Auslaßstutzen (15) des oberen Behälters (1) und dem festen Flansch (2) durch eine Dichtung (4), vorzugsweise durch einen O-Ring, erzielt wird, der in eine Ringnut in der oberen Innenfläche des Flansches (2) eingelegt ist und mit der Außenumfangsfläche des Auslaßstutzens (15) zusammenwirkt; und
- daß die Dichtung zwischen der Verbindungseinheit (5) und der zylindrischen Hülse (24) im unteren Teil, das Teil des Flansches (2) ist, mit Hilfe einer Dichtung (12), vorzugsweise eine O-Ringes, erreicht wird, der in einer Ringnut an der inneren zylindrischen Umfangsfläche des Hülsenansatzes (9) der Verbindungseinheit (5) angeordnet ist und mit der zylindrischen, Außenumfangsfläche der Hülse (24) des Flansches (2) zusammenwirkt, während die Abdichtung der Verbindungseinheit (5) in dem Einlaßanschluß (10) des unteren Behälters (13) mit Hilfe einer Lippendichtung (11) bewerkstelligt wird.

4. Vorrichtung nach Anspruch 1, dadurch gekennzeichnet, daß die Krone (52) der Verbindungseinheit (5) in der höchsten Stellung, die durch die Verbindungseinheit während ihrer axialen Bewegung in bezug auf den Flansch erreicht wird, in den Umfangshohlraum (22) auf der Außenseite des Flansches eintritt.

5. Vorrichtung nach Anspruch 1, dadurch gekennzeichnet, daß am Außenumfang der Verbindungseinheit (5) ein Hebel (6) mit einem Handgriff befestigt ist, um eine Winkelmäßige Bewegung der Verbindungseinheit zu ermöglichen.

## Revendications

1. Dispositif mécanique pour connecter par une connexion étanche deux récipients pour liquides dont le plus haut (1) est attaché au sommet d'un logement (3) dans lequel est inseré, de façon à pouvoir être enlevé, un récipient plus bas (13) lequel peut recevoir les liquides provenants du récipient le plus haut (1), caracterisé par une flasque (2) assurée à la sommité du logement (3), ladite flasque présentant une cavité périphérique (22) ouverte vers le bas et un manchon cylindrique (24) plus bas, sur la surface extérieure duquel tourne, avec une tenue étanche, une pièce de connexion (5) munie d'une couronne au sommet (52), laquelle présente à l'intérieur deux rainures hélicoïdales (8) à pas rapide lesquelles s'engagent avec des goujons correspondants (7) intégraux avec la flasque (2) et forment un couplement hélicoïdal (7-8) par lequel la connexion (5) peut être attachée et détachée en respect de la flasque fixe au fin de permettre le mouvement axial vers en haut et vers en bas, pour être attachée à et détachée du manchon d'entrée (10) du récipient inférieur (13).

2. Dispositif selon la revendication 1, caracterisé par le fait que la connexion (5) est munie dans sa partie inférieure d'un collet intérieurement cylindrique (9) lequel constitue l'élément de guidage pour la connexion même vis-à-vis de la flasque (2), opérant par une connexion coulissante avec le manchon (24), la partie inférieure duquel est intégrale avec la flasque même, ledit collet (9) étant conique extérieurement et fuselé vers le bas.

3. Dispositif selon les revendications 1 et 2, caracterisé par le fait que la tenue entre le collet de décharge (15) du récipient supérieur (1) et la flasque fixe (2) est obtenue moyennant une garniture (4), préférablement du type à "O-ring", située dans une cavité annulaire sur la suface supérieure interne de la flasque (2) et co-opérant avec la surface périphérique du collet de décharge (15); et par le fait que la tenue entre la pièce de connexion (5) et le manchon cylindrique (24), dans la partie inférieure integrale avec la flasque (2) est obtenue par une garniture (12), préférablement aussi du type A "O-ring", située dans une cavité annulaire sur la surface cylindrique interne du collet (9) de la connexion (5) et co-opérant avec la surface cylindrique extérieure du manchon (24) de la flasque (2), tandis que la tenue de la connexion (5) dans l'entrée (10) du récipient inférieur (13) est obtenue par le moyen d'une garniture scellante (11).

4. Dispositif selon la revendication 1, caracterisé par le fait que la couronnne (52) de la connexion (5) dans la position la plus haute atteinte par la connexion même dans son mouvement axial vis-à-vis de la flasque (2) entre dans la cavité (22) périphérique à l'extérieur de la flasque même.

5. Dispositif selon la revendication 1, caracterisé par le fait qu'un levier (6) avec poignée est attaché à la périphérie de la connexion (5) pour permettre le mouvement angulaire de ladite connexion.
